# EUROPÄISCHE PATENTSCHRIFT

(11) **EP 2 635 395 B1**
(45) Veröffentlichungstag und Bekanntmachung des Hinweises auf die Patenterteilung: **31.08.2016**
(21) Anmeldenummer: 11766935.8
(22) Anmeldetag: 27.09.2011
(51) Int. Cl.: B23D 25/12

(54) **HOCHGESCHWINDIGKEITSSCHERE**
HIGH-SPEED SHEARS
MACHINE À CISAILLER À GRANDE VITESSE

(30) Priorität: 02.11.2010 EP 10189605
(43) Veröffentlichungstag der Anmeldung: 11.09.2013
(73) Patentinhaber: Primetals Technologies Austria GmbH, 4031 Linz (AT)
(72) Erfinder: PEITL, Wolfgang, A-4490 St. Florian (AT); ECKERSTORFER, Gerald, A-4060 Leonding (AT); HOHENBICHLER, Gerald, A-4484 Kronstorf (AT); LINZER, Bernd, A-4020 Linz (AT); WENZL, Wolfgang, 1060 Wien (AT); ZAHEDI, Michael, A-4502 St. Marien (AT)
(74) Vertreter: Metals@Linz
(86) Internationale Anmeldenummer: PCT/EP2011/066722
(87) Internationale Veröffentlichungsnummer: WO 2012/059277

(56) Entgegenhaltungen:
- WO-A1-97/43097
- AT-B- 181 484
- DE-B- 1 281 793
- GB-A- 2 327 061

## Beschreibung

### Technisches Gebiet

Die Erfindung betrifft eine Hochgeschwindigkeitsschere zum Querteilen eines Flachwalzgutes, mit zwei gegenüberliegend angeordneten Trommeln, welche mittels einer Antriebsvorrichtung mit einer der Walzgut-Durchlaufgeschwindigkeit entsprechenden Umfangsgeschwindigkeit antreibbar sind, wobei jede dieser Trommeln jeweils einen ersten, um eine Drehachse drehbar gelagerten Teil, und einen zweiten, als Träger eines Messers fungierenden Teil, aufweist, wobei zwischen dem ersten Teil und dem zweiten Teil eine Radialführung so ausgebildet ist, dass der Messerträger mittels einer Betätigungsvorrichtung zwischen einer Anstellungsposition und einer Schnittposition verstellbar ist.

### Stand der Technik

In der Walzwerktechnik werden zum Querteilen von Walzband so genannte Trommelscheren eingesetzt, welche im Wesentlichen aus zwei Messertrommeln bestehen, deren Messer zum Schnitt zusammengeführt werden. Derartige Zweitrommelscheren können beispielsweise als Hochlaufscheren betrieben werden, das heißt, die Messertrommeln werden aus dem Stand während weniger als einer Trommelumdrehung auf Walzgut-Durchlaufgeschwindigkeit beschleunigt, die Messer in Schnittposition gebracht und anschließend wieder verzögert.

Dabei ist von Nachteil, dass mit zunehmender Durchlaufgeschwindigkeit des Walzgutes für den Beschleunigungsvorgang eine exorbitante Antriebsleistung erforderlich ist.

Um schnell laufende Stahlbänder zu trennen, sind daher Zweitrommelscheren bekannt, deren Messertrommeln nicht bei jedem Schnitt hoch laufen, sondern kontinuierlich so angetrieben werden, dass die Messerkreis-Umfangsgeschwindigkeit der Bahngeschwindigkeit entspricht.

Eine typische Ausführungsform ist beispielsweise in der DE 195 42 173 C2 offenbart. Die Messer sind in einer nutförmigen Ausnehmung der Messertrommel geführt. Zum gewünschten Schnittzeitpunkt werden die Messer mittels einer Betätigungsvorrichtung, z.B. einer Zug- und Druckstange, ausgefahren. Dabei ist die Führung des Messers durch die konstruktiv mögliche Tiefe der Ausnehmung begrenzt.

Ein weiteres Beispiel wird in der GB 2327061A gezeigt, die die Merkmale des Oberbegriffs vom ersten Anspruch offenbart. 15 Heutzutage werden in der Walzwerktechnik zunehmend dünner werdende Stahlbänder verarbeitet, deren Dicke häufig kleiner als ein Millimeter ist. Die Bahngeschwindigkeit kann bis zu 20 m/s und mehr betragen.

Um ein dünnes, schnell bewegtes Metallband schneiden zu können, ergeben sich hohe Anforderungen an die Abtrennvorrichtung. Wegen des engen Messerspalts müssen die Messer exakt synchron zueinander bewegt werden und die Messerführung muss präzise sein. Diese Präzision soll darüber hinaus über einen möglichst langen Betriebszeitraum eingehalten werden können. Laufen die Messer asynchron, oder ändert sich der Messerspalt, beispielsweise aufgrund von mechanischen Toleranzen und/oder Verschleiß, so kann es zu Störungen bis hin zur Beschädigung der Messer kommen.

Bekannte Trommelscheren stoßen hinsichtlich Synchronisation und Präzision zunehmend an ihre Grenzen, wenn sehr dünne und sehr schnell bewegte Stahlbänder zuverlässig getrennt werden sollen.

### Darstellung der Erfindung

Der Erfindung liegt die Aufgabe zu Grunde, eine Hochgeschwindigkeitsschere anzugeben, deren Messerführung und deren Messer-Synchronisation eine hohe Präzision aufweist und über einen langen Betriebszeitraum aufrechterhalten bleibt, und welche zudem einfach und robust konstruiert ist.

Die Lösung dieser Aufgabe erfolgt durch die Merkmale des Anspruchs 1. Vorteilhafte Ausgestaltungen der Erfindung sind in den abhängigen Ansprüchen definiert.

Anders als im Stand der Technik sieht die Erfindung vor, das Messer nicht in einer nutförmigen Ausnehmung einer Messertrommel zu führen, sondern den Messerhalter als Hohlquerschnitt auszubilden und in dessen Hohlraum die Trommelwelle so anzuordnen, dass der Messerhalter darauf in radialer Richtung gleitbeweglich gelagert ist. Damit wird konstruktiv eine bessere Möglichkeit der Führung des Messerhalters eröffnet. Die Führungslänge ist nicht mehr durch die verhältnismäßig geringe Tiefe einer Ausnehmung begrenzt, sondern kann vorteilhaft in der gewünschten Länge außen an der Messerwelle ausgebildet werden. Die große Führungslänge bewirkt eine präzise Messerführung. Damit kann der Messerspalt sehr genau eingestellt werden und bleibt während einer vergleichsweise langen Betriebszeit nahezu unverändert erhalten.

Erfindungsgemäß ist also vorgesehen, dass die Messertrommel aus einem ersten und einem zweiten Teil besteht, wobei der zweite Teil als Hohlquerschnitt ausgebildet ist und einen Hohlraum aufweist, in welchem der erste Teil angeordnet ist und der zweite Teil auf dem ersten Teil gleitbeweglich gelagert ist.

In einer bevorzugten Ausführungsform weist der Hohlquerschnitt des ersten Teils gegenüberliegende parallel verlaufende Innenflächen auf, die mit korrespondierenden Außenflächen des zweiten Teils Gleitflächen bilden. Dadurch ist die Radialführung zwischen dem ersten und dem zweiten Teil präzise und verschleißarm. Beides eine Voraussetzung für eine präzise Einstellung eines sehr kleinen Messerspalts.

Um eine sehr hohe Präzision der Messerführung zu erreichen kann es günstig sein, wenn die Radialführung als Flachführung ausgebildet ist. Die während des Schnitts aufzunehmende Flächenpressung kann dadurch gering gehalten werden.

Eine robuste Ausführung kann dadurch gekennzeichnet sein, dass der zweite Teil einen U-förmigen Teil aufweist, und dass die Radialführung an den einander zugewandten Innenflächen der Schenkel des U-förmigen Teils ausgebildet ist.

Es kann dabei günstig sein, das Messer an einer von den Schenkeln abgewandten Seite des Bodenteiles des U-förmigen Teils anzuordnen. Die Befestigung des Messer kann durch eine an sich bekannte Messer-Spannvorrichtung erfolgen.

In einer besonders bevorzugten Ausführungsform ist vorgesehen, die beiden Trommeln mit einer einzigen Antriebseinheit anzutreiben und zur Synchronisation der Umfangsgeschwindigkeiten der oberen und der unteren Trommel ein Zahnradgetriebe mit einer Schrägverzahnung zu verwenden. Dadurch ist eine präzise Synchronisation der beiden Trommeln durch die Zahnradkämmung stets gegeben.

Von ganz besonderem Vorteil kann eine Ausführungsform sein, bei der das Zahnradgetriebe zumindest ein mehrteiliges Zahnrad aufweist und mittels einer auf das mehrteilige Zahnrad wirkenden Spannvorrichtung Spielfreiheit herstellbar ist. Dadurch kann auch ein sehr kleiner Messerspalt präzise vorgegeben werden.

Die Betätigungsvorrichtung kann mechanisch oder hydraulisch wirkend sein. Bevorzugt ist eine hydraulische Betätigung des Messerhalters mittels zumindest eines Hydraulikzylinders. Ein Hydraulik-Aktuator ist vergleichsweise einfach in die Trommel integrierbar. Die Versorgung mit Hydrauliköl kann mittels an sich bekannter Drehdurchführungen erfolgen. Besonders vorteilhaft kann ein einfach wirkender Zylinder sein.

Hierbei kann es konstruktiv günstig sein, wenn der Hydrozylinder einerseits am ersten Teil und andererseits am Bodenteil des zweiten Teils abgestützt ist.

Aus Gründen der Betriebssicherheit ist es günstig, wenn bei Ausfall der hydraulischen Energieversorgung die Messer in einer Rückzugsstellung verharren. Dies kann beispielsweise mittels einer Feder erreicht werden. Erst wenn die Federkraft überwunden wird, bewegt sich der zweite Teil aus einer Rückzugsstellung heraus. Beim Einsatz eines einfach wirkenden Hydraulikzylinders werden die Federn vorgespannt eingebaut und haben die Aufgabe, den Messerhalter wieder in die Ausgangsposition zurückzubringen, wenn der Hydraulik-Druck nach dem Schnitt wieder reduziert wird.

Es kann günstig sein, wenn die Federkraft durch zwei oder mehrere sich in radiale Richtung erstreckende Stapel von Tellerfedern erzeugt wird.

Um bei der Verstellung des Messerhalters Unwuchten auszugleichen, kann es günstig sein, wenn eine Einrichtung vorgesehen ist, welche zum eingeleiteten Schnittzeitpunkt eine korrespondierende Gegenmasse gegenläufig zur Schnittbewegung verschiebt und dadurch entstehende Unwuchten dynamisch ausgleicht.

Es kann vorteilhaft sein, wenn die Betätigungsvorrichtung dazu eingerichtet ist, den Messerträger in einer zwischen der Ausgangsposition und der Schnittposition liegenden Voranstellungs-Position zu positionieren. Dadurch wird erreicht, dass für den Schnittvorgang nur ein kurzer Hub ausgeführt werden muss, während der übrigen Zeit aber die Messer vom Band weit genug entfernt positioniert sind, als das das Walzgut oder die Messer beschädigt werden könnten. Aus der Voranstellungs-Position kann mit einem vergleichsweise geringen antriebstechnischen Aufwand in einer einzigen Umdrehung die Schnittposition erreicht werden. Mit anderen Worten, das Ausfahren wird in zwei Schritten vorgenommen: Bei einem Verfahrweg von beispielsweise 70 mm, wird das Messer im ersten Schritt 64 mm ausgefahren, und in einem zweiten Schritt, während einer einzigen Umdrehung der Messertrommel, der verbleibende Weg von 6 mm zurück gelegt.

### Kurzbeschreibung der Zeichnungen

Zur weiteren Erläuterung der Erfindung wird im nachfolgenden Teil der Beschreibung auf die Zeichnungen Bezug genommen aus denen weitere vorteilhafte Ausgestaltungen Einzelheiten und Weiterbildungen der Erfindung anhand eines nicht einschränkenden Ausführungsbeispiels zu entnehmen sind.

Es zeigen:
- Figur 1: ein Ausführungsbeispiel einer erfindungsgemäßen Hochgeschwindigkeitsschere in einer Vorderansicht, wobei die Obertrommel und die Untertrommel in einem Schnitt gezeigt sind;
- Figur 2: eine Rückansicht der Hochgeschwindigkeitsschere, gesehen von schräg oben;
- Figur 3: eine schematische Darstellung der Hochgeschwindigkeitsschere;
- Figur 4: einen Schnitt durch eine Messertrommel.

### Ausführung der Erfindung

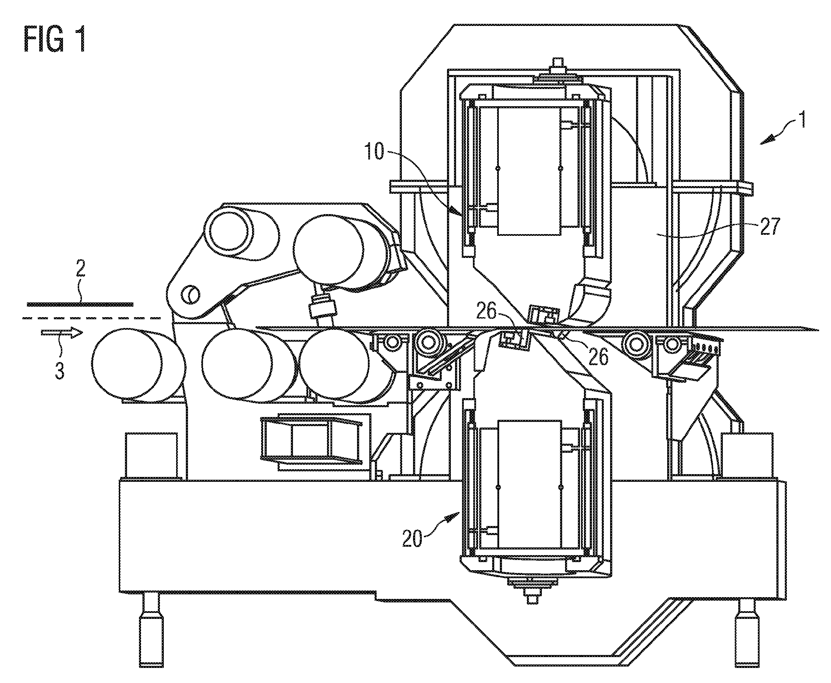

Die Figur 1 zeigt in einer Vorderansicht eine Ausführungsform der erfindungsgemäßen Hochgeschwindigkeitsschere 1. Die Hochgeschwindigkeitsschere 1 dient zum Querteilen von schnell bewegten Stahlbändern. Für die Ausführung des Schnittes wird ein Hub von etwa 70 mm ausgeführt. Die Zweitrommelschere 1 besteht aus einer Obertrommel 10 und einer Untertrommel 20, deren Achsen in einem fixen Abstand zueinander im Gestell 27 drehbar gelagert sind. Die beiden Messertrommeln 10, 20 rotieren in entgegen gesetzter Richtung. Das zu schneidende Walzgut 2 wird in Richtung des Pfeils 3 von links zu dieser Abtrennvorrichtung 1 herangeführt, zu einem gewünschten Zeitpunkt getrennt und in der Darstellung der Figur 1 rechts abgeführt. Die typische Geschwindigkeit des Walzbandes 2 liegt bei 2 - 20 m/s oder darüber. Das Stahlband 2 hat üblicherweise eine Dicke von etwa 0,5 mm bis 5 mm. Ein Messerspalt, der zum Schnittzeitpunkt nicht größer sein soll, als 30% der Banddicke, erfordert daher eine sehr präzise Einstellung und Führung der Messer. Unter dem Begriff Messerspalt ist im Folgenden der Abstand der beiden Messer im Schnittzeitpunkt in Parallelstellung der Schneiden zu verstehen. Unter Berücksichtigung der elastischen Verformung der Konstruktion beim Schnittvorgang kann dies bedeuten, dass in geometrischer Hinsicht eine spaltfreie Ausgangsposition, oder sogar überlappende Messer eingestellt werden können.

In einem Betriebszustand, in welchem das Stahlband 2 noch nicht geschnitten werden soll, sind die beiden Messer 26 in den Messertrommeln 10, 20 zurückgezogen (Ausgangs- oder Ruheposition) und das Walzgut 2 passiert ungeschnitten den durch die beiden Messerkreise gebildeten Spalt. Die beiden Trommeln 10 und 20 drehen meist oder fortwährend mit einer Messerkreis-Umfangsgeschwindigkeit, die im Wesentlichen gleich groß wie die Bahngeschwindigkeit des durchlaufenden Walzbandes 2 ist. Im hier dargestellten Ausführungsbeispiel der erfindungsgemäßen Hochgeschwindigkeitsschere 1 hat der Messerkreis einen Durchmesser von etwa 1,5 m.

Um das schnell laufende Stahlband 2 zu schneiden, werden die beiden Messer 26 vor einem gewünschten Schnittzeitpunkt während der Rotation der Trommeln 10, 20 aus der zurückgezogenen Ruhestellung in eine Voranstellungs-Position gebracht. Diese Voranstellungs-Position ist so gewählt, dass die Messer möglichst nahe, - aber doch mit einem gewissen Sicherheitsabstand, damit keine Oberflächenkratzer entstehen, - an das laufende Metallband 2 herangeführt sind, so dass nach einem nun gegebenen Schnittbefehl binnen einer Umdrehung die beiden Messer 26 in ihre Schnittposition ausgefahren werden können. Der eigentliche Abtrennvorgang erfolgt dann durch das Zusammentreffen der vollständig ausgefahrenen Messer 26. Der Vorteil dieses zweistufigen Ausfahrens liegt darin, dass für den eigentlichen Schnittvorgang während einer Umdrehung nur ein kurzer Stellweg zurückgelegt werden muss. Anderseits, wenn nicht geschnitten wird, sind die beiden Messer 26 in der Ausgangs- oder Ruheposition vom durchlaufenden Band weit genug entfernt, um die Bandoberfläche beschädigen zu können.

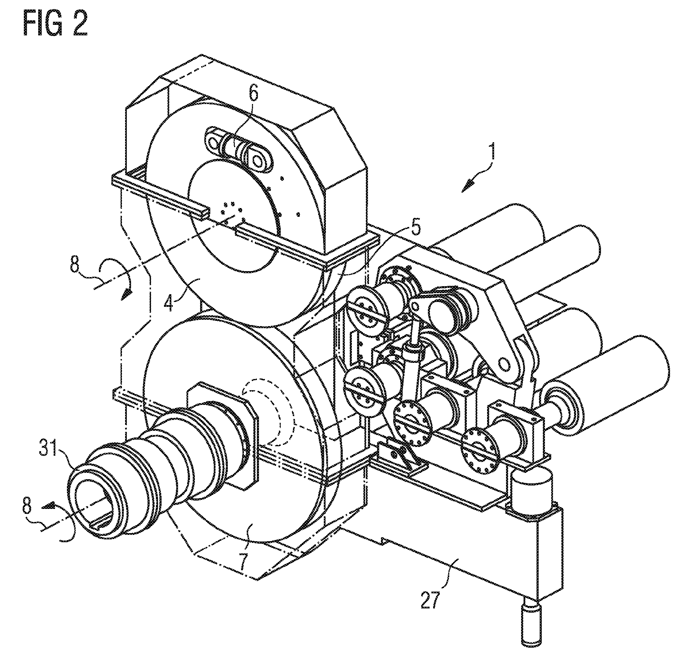

Die Figur 2 zeigt die Hochgeschwindigkeitsschere 1 von einer Rückansicht. Beide Messertrommeln 10, 20 werden von einer einzigen Antriebseinheit 31 angetrieben. Diese Antriebseinheit 31 kann je nach benötigter Antriebsleistung aus einem oder aus mehreren Motoren und ggf. einem Getriebe bestehen. Im gezeigten Ausführungsbeispiel ist die Antriebseinheit 31 an der unteren Drehachse 8 angekoppelt. Das unten eingeleitete Drehmoment wird mittels des Zahnrads 7 auf die beiden Zahnräder 4, 5 der oberen Drehachse 8 übertragen. Die beiden stirnseitig aneinander liegenden Zahnräder 4, 5 der oberen Drehachse bilden zusammen ein geteiltes Zahnrad, welches zur Einstellung einer Spielfreiheit dient: Hierzu werden die beiden Zahnräder 4, 5 mittels der Spannvorrichtung 6 gegenläufig vorgespannt. In der Kämmung ist dann das Spiel zwischen dem Zahnrad 7 und den Zahnrädern 4, 5 null. Da die Kämmung in keinem Betriebszustand gelöst wird, ist der Verschleiß des Zahnradgetriebes sehr gering. Die Synchronisation zwischen der oberen und der unteren Drehachse ist stets gewährleistet.

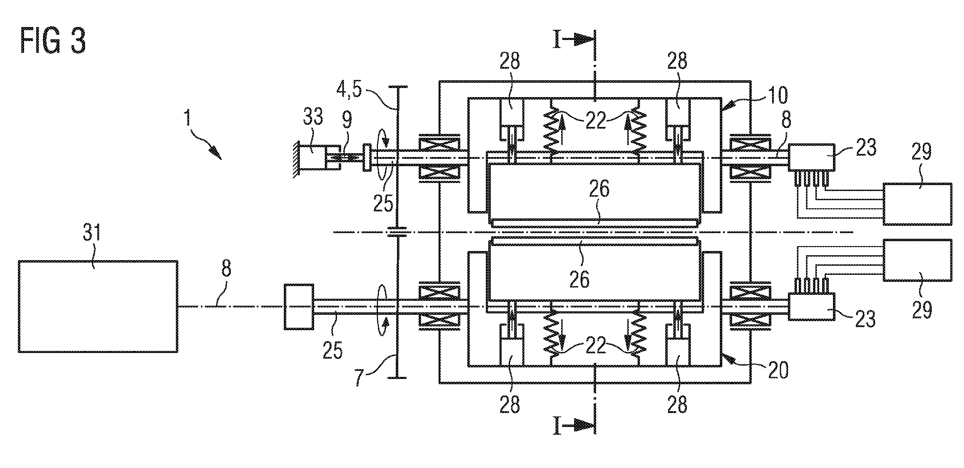

Zur Einstellung des Messerspalts sind die Zahnräder 4,5,7 des Zahnradgetriebes mit jeweils einer Schrägverzahnung versehen. Die Schrägverzahnung zwischen dem unteren Zahnrad 7 und den beiden oberen Zahnrädern 4, 5 ermöglicht eine Einstellung des Messerspalts, indem man eine der beiden Drehachsen axial verschiebt. Im vorliegenden Beispiel wird die obere Achse 8 gemäß Pfeil 9 (siehe Figur 3) axial verschoben. Dies erfolgt durch die axiale Antriebsvorrichtung 33. Die untere Achse 8 ist axial fix. Durch die Schrägverzahnung kann dadurch die Winkelposition der Messer zueinander voreilend oder nacheilend eingestellt werden. Von Vorteil ist dabei, dass für die Kopplung von oberer und unterer Trommel Standardgetriebe verwendet werden können.

Die Figur 3 zeigt die Hochgeschwindigkeitsschere in einer schematischen Darstellung.

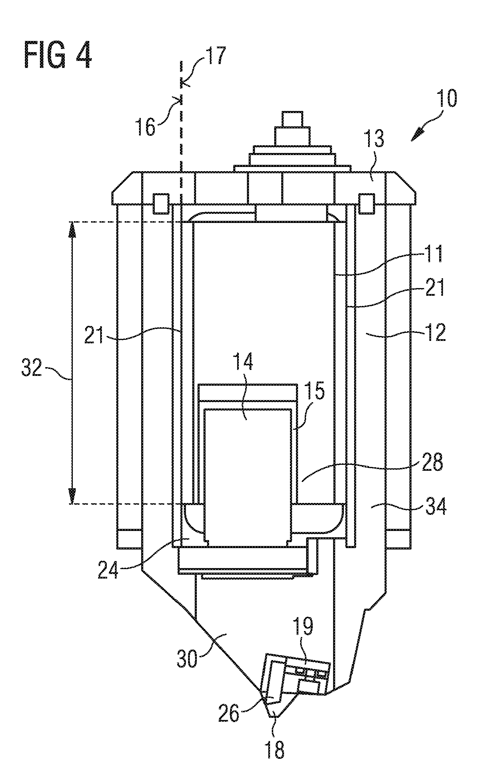

Die Figur 4 zeigt einen Schnitt durch eine Messertrommel. Die Messertrommel 10 besteht im Wesentlichen aus dem ersten Teil 11, welcher in axialer Fortführung die eigentliche Trommelwelle 25 bildet. Um diesen ersten Teil 11 ist gemäß der Erfindung der als Hohlprofil (Hohlraum 24) ausgebildete zweite Teil 12, der eigentliche Messerhalter, angeordnet. Das Ausfahren des Messers 26 erfolgt durch hydraulische Kraftübertragung. Um den Messerhalter 12 und damit das Messer 26 aus einer Ausgangs- oder Voranstellungs-Position in radialer Richtung in eine Schnittposition zu bringen, werden die beiden Hydraulikzylinder 28 (siehe Figur 3) mit dem Druck einer Hydraulikflüssigkeit beaufschlagt. Diese Hydraulikflüssigkeit stellt eine nicht näher dargestellte Hydraulikpumpe von außen bereit, wobei die Hydraulikflüssigkeit über an sich bekannte Drehdurchführungen 23 und Hydraulik-Servoventilen 29 in die Trommelwelle 25 eingespeist wird. Sie gelangt über Verbindungsleitungen in den Zylinderraum des jeweiligen Hydraulikzylinders 28. Um das Messer 26 auszufahren, muss die Federkraft von zwei Tellerfederpaketen 22 überwunden werden. Die beiden Tellerfederpakete 22 dienen dazu, den ersten Teil 11 und den zweiten Teil 12 unabhängig von der Ausfahrposition des Messers 26 stets unter einer gewissen Vorspannung zu halten.

Der rechteckförmige Querschnitt im inneren des Messerhalters 12 wird durch einen U-förmigen Teil und ein Abschlussstück 13 gebildet. Am Bodenteil 30 ist das Messer 26 mittels einer Messer-Klemmvorrichtung 19 gehalten. Die Messer-Klemmvorrichtung 19 kann beispielsweise mittels Schrauben oder Hydraulikzylinder realisiert sein, was hier nicht näher dargestellt ist. Im quaderförmigen Innen- oder Hohlraum des Messerhalters 12 ist der drehgelagerte Teil 11 angeordnet. Ebenso der hydraulische Aktuator zum Ausfahren des Messers. Die radiale Führung zwischen den beiden Teilen 11 und 12 ist als Gleitführung ausgebildet. Einander zugewandte Innenflächen 16 des Hohlprofils 12 bilden Gleitflächen mit korrespondierenden Außenflächen 17 des Wellenteils 11. Der Messerhalter 12 ist dadurch über eine große Führungslänge 32 sehr genau geführt. Die Präzision dieser Radialführung 21 bleibt über eine lange Gebrauchsdauer der Hochgeschwindigkeitsschere 1 erhalten und ermöglicht über einen langen Betriebszeitraum eine präzise Einstellung des Messerspalts. Die erfindungsgemäße Konstruktion ist betriebssicher, mit vergleichsweise nur geringem Verschleiß behaftet und servicefreundlich, da nach einer Demontage des Abschlussteil 13 sowohl die hydraulische Kolben-Zylinder-Einheit 28, als auch die Gleitflächen der Radialführung 21 auf Verschleiß hin leicht überprüft werden können.

Wie die Querschnittdarstellung der Figur 4 zeigt, besteht der Hydrozylinder 28 aus einem Zylinder 15, der in einer Ausnehmung im ersten Teil 11 angeordnet ist. Im Zylinder 15 ist der Hydraulikkolben 14 beweglich geführt. Die Beaufschlagung mit Hydraulikflüssigkeit erfolgt durch im Wellenteil 11 ausgebildete, in der Zeichnung nicht näher dargestellte Verbindungsleitungen.

Im Gegensatz zum Stand der Technik, bleiben gemäß der vorliegenden Erfindung die Zahnräder 7 und 4,5 ständig in Eingriff. Ein häufiges Lösen dieses Zahnradeingriffs würde zu vermehrtem Verschleiß und damit zu einem Verlust an Genauigkeit führen.

In der Figur 4 sind jeweils an den Stirnseiten des Teils 12 sogenannte Messerspalt-Distanzhalter 18 zu sehen. Diese Messerspalt-Distanzhalter 18 stellen sicher, dass die beiden im Schnittzeitpunkt vollständig ausgefahrenen Messer 26 sich nicht berühren.

Die erfindungsgemäße Konstruktion ermöglicht eine radiale Verstellung des Messerhalters 12 über einen vergleichsweise großen Verstellweg, z.B. 70 mm. Dies hat den Vorteil, dass zum Einfädeln des Bandkopfes die beiden Messer 26 genügend weit auseinander gefahren werden können. Zum anderen kann, wie oben dargestellt, vorbereitend vor einer Schnittausführung, eine Voranstellungs-Position eingenommen werden, so dass anschließend während einer Umdrehung nur der restliche Verstellweg z.B. 5 mm bis zur Schnittposition verfahren werden muss.

Um die Unwuchten während des Schnittvorgangs auszugleichen, kann der Abschlussteil 13 mit einer Massen-Ausgleichseinrichtung versehen sein. Dadurch können Unwuchten ausgeglichen werden.

Durch den Einsatz von Verschleißleisten kann eine weitgehend spielfreie Positionierung in Umfangsrichtung der Messer erreicht werden.

### Zusammenstellung der verwendeten Bezugszeichen

- 1: Hochgeschwindigkeitsschere
- 2: Walzband
- 3: Bewegungsrichtung des Walzbandes
- 4: erstes oberes Zahnrad
- 5: zweites oberes Zahnrad
- 6: Spannvorrichtung
- 7: unteres Zahnrad
- 8: Drehachse
- 9: Pfeil
- 10: obere Messertrommel, Obertrommel
- 11: erster Teil
- 12: zweiter Teil, Messerhalter
- 13: Abschlussstück
- 14: Kolben
- 15: Zylinder
- 16: Innenflächen, Gleitfläche
- 17: Außenflächen, Gleitfläche
- 18: Messerspalt-Distanzhalter
- 19: Messer-Klemmvorrichtung
- 20: untere Messertrommel, Untertrommel
- 21: Radialführung
- 22: Tellerfederpaket
- 23: Drehdurchführung
- 24: Hohlraum, Hohlquerschnitt
- 25: Trommelwelle
- 26: Messer
- 27: Gestell
- 28: Hydraulikzylinder, Kolben-Zylinder-Einheit
- 29: Hydraulik-Servoventil
- 30: Bodenteil
- 31: Antriebsvorrichtung
- 32: Führungslänge
- 33: axiale Antriebsvorrichtung
- 34: U-förmiger Teil

## Patentansprüche

1. Hochgeschwindigkeitsschere zum Querteilen von Walzgut, umfassend:
zwei gegenüberliegend angeordnete Trommeln (10,20), welche mittels einer Antriebsvorrichtung (31) mit einer der Walzgut-Durchlaufgeschwindigkeit entsprechenden Umfangsgeschwindigkeit antreibbar sind,
wobei jede Trommel (10,20) jeweils einen ersten, um eine Drehachse (8) drehbar gelagerten Teil (11), und einen zweiten, als Träger eines Messers (26) fungierenden Teil (12) aufweist,
wobei zwischen dem ersten Teil (11) und dem zweiten Teil (12) eine Radialführung (21) so ausgebildet ist, dass der Messerträger (12) mittels einer Betätigungsvorrichtung (28) zwischen einer Ausgangsposition und einer Schnittposition verstellbar ist, **dadurch gekennzeichnet,**
**dass** der Messerträger (12) als Hohlquerschnitt ausgebildet ist und einen Hohlraum (24) aufweist, in welchem der drehbar gelagerten Teil (11) angeordnet ist, und
**dass** der Messerträger (12) auf dem drehbar gelagerten Teil (11) gleitbeweglich gelagert ist.

2. Schere nach Anspruch 1, **dadurch gekennzeichnet, dass** der Hohlraum (24) durch gegenüberliegende, parallel verlaufende Innenflächen (16) begrenzt ist, die mit korrespondierenden Außenflächen (17) des ersten Teils (11) eine Gleitführung bilden.

3. Schere nach Anspruch 2, **dadurch gekennzeichnet, dass** die Gleitführung als Flachführung ausgebildet ist.

4. Schere nach einem der Ansprüche 1 bis 3, **dadurch gekennzeichnet, dass** der zweite Teil (12) einen U-förmigen Teil (34) mit zwei Schenkeln aufweist, und dass die Radialführung (21) an den beiden einander zugewandte Schenkelflächen der beiden Schenkel ausgebildet ist.

5. Schere nach Anspruch 4, **dadurch gekennzeichnet, dass** das Messer (26) an einer von den Schenkeln abgewandten Seite des Bodenteiles (30) des U-förmigen Teils (34) mittels einer Messer-Klemmvorrichtung (19) befestigt ist.

6. Schere nach einem der Ansprüche 1 bis 5, **dadurch gekennzeichnet, dass** die Betätigungsvorrichtung (28) dazu eingerichtet ist, den Messerträger (12) in einer zwischen der Ausgangsposition und der Schnittposition liegenden voranstellungs-Position zu positionieren.

7. Schere nach einem der Ansprüche 1 bis 6, **dadurch gekennzeichnet, dass** die beiden Trommeln (10,20) von einer einzigen Antriebseinheit (31) angetrieben werden und zur Synchronisation der Umfangsgeschwindigkeiten der oberen und der unteren Trommel (10, 20) mindestens ein Zahnradgetriebe (4,5,7) mit einer Schrägverzahnung vorgesehen ist.

8. Schere nach Anspruch 7, **dadurch gekennzeichnet, dass** das mindestens eine Zahnradgetriebe (4,5,7) zumindest ein mehrteiliges Zahnrad (4,5) aufweist und mittels einer auf das mehrteilige Zahnrad (4,5) wirkenden Spannvorrichtung (6) eine Spielfreiheit in der Kämmung des Zahnradgetriebes (4, 5,7) herstellbar ist.

9. Schere nach einem der vorstehenden Ansprüche, **dadurch gekennzeichnet,dass** die Betätigungsvorrichtung (28) zumindest einen Hydraulikzylinder umfasst.

10. Schere nach Anspruch 9, **dadurch gekennzeichnet, dass** der zumindest eine Hydraulikzylinder (28) einerseits am ersten Teil (11) und andererseits am Bodenteil (30) des zweiten Teils (12) abgestützt ist.

11. Schere nach Anspruch 10, **dadurch gekennzeichnet,dass** der erste Teil (11) und der zweite Teil (12) mittels mindestens eines Federelementes (22) auf Vorspannung zueinander gehalten werden.

12. Schere nach Anspruch 11, **dadurch gekennzeichnet, dass** das mindestens eine Federelement (22) durch zumindest zwei sich im Wesentlichen in radiale Richtung erstreckende Tellerfederstapel gebildet ist.

13. Schere nach Anspruch 9, **dadurch gekennzeichnet, dass** eine Einrichtung zum Verschieben einer bezüglich der Masse des zweiten Teils (12) fungierenden Gegenmasse vorhanden ist.

14. Schere nach Anspruch 7, **dadurch gekennzeichnet, dass** eine axiale Antriebsvorrichtung (33) vorhanden ist, welche auf zumindest eine Drehachse (8) einwirkt.

15. Schere nach einem der Ansprüche 9 bis 13, **dadurch gekennzeichnet, dass** der zumindest eine Hydraulikzylinder (28) ein einfach wirkender Zylinder ist.

16. Schere nach einem der Ansprüche 9 bis 13, **dadurch gekennzeichnet, dass** der als Messerhalter fungierende zweite Teil (12) mittels des zumindest einen Hydraulikzylinders (28) zuerst in eine voranstellposition und während minimal zweier, bevorzugt maximal 1,5 zum Schnitt zugeordneten Umdrehungen in die Schnittposition und wieder zurück verstellbar ist.

## Claims

1. High-speed shears for cutting rolling stock to length, comprising:
two drums (10, 20) arranged opposite one another, which are able to be driven by means of a drive device (31) at a circumferential speed that corresponds to the pass-through speed of the rolling stock,
wherein each drum (10, 20) has a first part (11) which is rotatably mounted about an axis of rotation (8) and a second part (12) which functions as a carrier of a blade (26),
wherein a radial guide (21) is embodied between the first part (11) and the second part (12) so that the blade carrier (12) can be adjusted by means of an actuating device (28) between a starting position and a cutting position,
**characterised in that**
the blade carrier (12) is embodied as a hollow cross section and has a cavity (24) in which the rotatably mounted part (11) is arranged, and
the blade carrier (12) is slidably mounted on the rotatably mounted part (11).

2. Shears according to claim 1, **characterised in that** the cavity (24) is delimited by opposing inner surfaces (16) running in parallel which, with corresponding outer surfaces (17) of the first part (11), form a sliding guide.

3. Shears according to claim 2, **characterised in that** the sliding guide is embodied as a flat guide.

4. Shears according to one of claims 1 to 3, **characterised in that** the second part (12) has a U-shaped section (34) with two arms, and that the radial guide (21) is embodied on the two surfaces of the two arms facing towards one another.

5. Shears according to claim 4, **characterised in that** the blade (26) is attached by means of a blade clamping device (19) on a side of the floor section (30) of the U-shaped section (34) facing away from the arms.

6. Shears according to one of claims 1 to 5, **characterised in that** the actuation device (28) is configured to position the blade carrier (12) in a preliminary position lying between the starting position and the cutting position.

7. Shears according to one of claims 1 to 6, **characterised in that** the two drums (10, 20) are driven by a single drive unit (31) and at least one gear (4, 5, 7) with helical gearing is provided for synchronisation of the circumferential speeds of the upper and lower drum (10, 20).

8. Shears according to claim 7, **characterised in that** the at least one gear (4, 5, 7) has at least one multipart gear wheel (4, 5) and freedom of play in the meshing of the gear wheels (4, 5, 7) can be established by means of a tensioning device (6) acting on the multipart gear wheel (4, 5).

9. Shears according to one of the preceding claims, **characterised in that** the actuating device (28) comprises at least one hydraulic cylinder.

10. Shears according to claim 9, **characterised in that** the at least one hydraulic cylinder (28) is mounted on one side on the first part (11) and on the other side on the floor section (30) of the second part (12).

11. Shears according to claim 10, **characterised in that** the first part (11) and the second part (12) are kept pre-tensioned in relation to one another by at least one spring element (22).

12. Shears according to claim 11, **characterised in that** at least one spring element (22) is formed by at least two disk spring stacks extending essentially in the radial direction.

13. Shears according to claim 9, **characterised in that** a device for moving a counter mass functioning in relation to the mass of the second part (12) is present.

14. Shears according to claim 7, **characterised in that** an axial drive device (33) is present which acts on at least one axis of rotation (8).

15. Shears according to one of claims 9 to 13, **characterised in that** the at least one hydraulic cylinder (28) is a single-acting cylinder.

16. Shears according to one of claims 9 to 13, **characterised in that** the second part (12) functioning as the blade holder is able to be moved by means of the at least one hydraulic cylinder (28) first into a preliminary position and during a minimum of two, preferably a maximum of 1.5 revolutions assigned to the cut, into the cutting position and back again.

## Revendications

1. Cisaille haute vitesse destinée à diviser transversalement un produit laminé, comprenant :
deux tambours (10, 20) agencés opposés, qui peuvent être entraînés au moyen d'un dispositif d'entraînement (31) à une vitesse périphérique correspondant à la vitesse de passage du produit laminé,
dans laquelle chaque tambour (10, 20) présente respectivement une première partie (11) montée rotative autour d'un axe de rotation (8), et une deuxième partie (12) faisant office de support d'une lame (26),
dans laquelle, entre la première partie (11) et la deuxième partie (12), est formé un guide radial (21) de telle manière que le porte-lame (12) peut être ajusté au moyen d'un dispositif d'actionnement (28) entre une position initiale et une position de coupe, **caractérisée en ce que**,
le porte-lame (12) est réalisé sous la forme de section creuse et présente une cavité (24) dans laquelle est agencée la partie montée rotative (11), et
le porte-lame (12) est monté coulissant sur la partie montée rotative (11).

2. Cisaille selon la revendication 1, **caractérisée en ce que** la cavité (24) est limitée par des surfaces intérieures (16) parallèles opposées, qui forment un guidage à glissière avec les surfaces extérieures (17) correspondantes de la première partie (11).

3. Cisaille selon la revendication 2, **caractérisée en ce que** le guidage à glissière est réalisé sous forme de guide plat.

4. Cisaille selon l'une quelconque des revendications 1 à 3, **caractérisée en ce que** la deuxième partie (12) présente une pièce en forme de U (34) à deux branches, et le guide radial (21) est réalisé sur les deux surfaces de branche, tournées l'une vers l'autre, des deux branches.

5. Cisaille selon la revendication 4, **caractérisé en ce que** la lame (26) est fixée au niveau d'un côté, détourné des branches, de la partie de fond (30) de la pièce en forme de U (34) au moyen d'un dispositif de serrage de lame (19).

6. Cisaille selon l'une quelconque des revendications 1 à 5, **caractérisée en ce que** le dispositif d'actionnement (28) est installé de manière à positionner le porte-lame (12) dans une position de préutilisation se trouvant entre la position initiale et la position de coupe.

7. Cisaille selon l'une quelconque des revendications 1 à 6, **caractérisée en ce que** les deux tambours (10, 20) sont entraînés par une unité d'entraînement (31) unique et au moins un train d'engrenages (4, 5, 7) avec une denture oblique est prévu en vue d'une synchronisation des vitesses périphériques des tambours supérieur et inférieur (10, 20).

8. Cisaille selon la revendication 7, **caractérisée en ce que** le au moins un train d'engrenages (4, 5, 7) présente au moins un rouage en plusieurs parties (4, 5) et une absence de jeu dans le pignonnage du train d'engrenages (4, 5, 7) peut être créée au moyen d'un dispositif de mise en tension (6) agissant sur le rouage en plusieurs parties (4, 5).

9. Cisaille selon l'une quelconque des revendications précédentes, **caractérisée en ce que** le dispositif d'actionnement (28) comprend au moins un vérin hydraulique.

10. Cisaille selon la revendication 9, **caractérisée en ce que** le au moins un vérin hydraulique (28) est soutenu d'une part au niveau d'une première partie (11) et d'autre part au niveau d'une partie de fond (30) de la deuxième partie (12).

11. Cisaille selon la revendication 10, **caractérisée en ce que** la première partie (11) et la deuxième partie (12) sont maintenues en prétension l'une par rapport à l'autre au moyen d'au moins un élément formant ressort (22).

12. Cisaille selon la revendication 11, **caractérisée en ce que** le au moins un élément formant ressort (22) est formé grâce à au moins deux piles de ressort à disque s'étendant essentiellement dans le sens radial.

13. Cisaille selon la revendication 9, **caractérisée en ce qu'**un appareil destiné à déplacer une contre-masse agissant par rapport à la masse de la deuxième partie (12) est présent.

14. Cisaille selon la revendication 7, **caractérisée en ce qu'**un dispositif d'entraînement axial (33) agissant sur au moins un axe de rotation (8) est présent.

15. Cisaille selon l'une quelconque des revendications 9 à 13, **caractérisée en ce que** le au moins un vérin hydraulique (28) est un vérin simple effet.

16. Cisaille selon l'une quelconque des revendications 9 à 13, **caractérisée en ce que** la deuxième partie (12) faisant office de porte-lame peut être ajustée au moyen du au moins un vérin hydraulique (28) d'abord dans une position de préutilisation, puis pendant au moins deux, de manière préférée au plus 1,5 tour(s) affecté(s) à la coupe, puis à nouveau au retour.
